**Europäisches Patentamt**

**European Patent Office**

**Office européen des brevets**

(19)

(11) Veröffentlichungsnummer: **0 075 032**
**B1**

(12) **EUROPÄISCHE PATENTSCHRIFT**

(45) Veröffentlichungstag der Patentschrift:
**08.01.86**

(51) Int. Cl.⁴: **G 01 B 11/30**, G 01 B 11/06

(21) Anmeldenummer: **81107336.0**

(22) Anmeldetag: **17.09.81**

(54) Verfahren zur interferometrischen Oberflächentopographie.

(43) Veröffentlichungstag der Anmeldung:
**30.03.83 Patentblatt 83/13**

(45) Bekanntmachung des Hinweises auf die Patenterteilung:
**08.01.86 Patentblatt 86/2**

(84) Benannte Vertragsstaaten:
**DE FR GB**

(56) Entgegenhaltungen:
**EP - A - 0 021 148**
**DE - B - 2 851 750**
**DE - C - 2 636 498**
**US - A - 3 715 165**

(73) Patentinhaber: **IBM DEUTSCHLAND GMBH,**
**Pascalstrasse 100, D-7000 Stuttgart 80 (DE)**

(84) Benannte Vertragsstaaten: **DE**

(73) Patentinhaber: **International Business Machines**
**Corporation, Old Orchard Road, Armonk, N.Y. 10504 (US)**

(84) Benannte Vertragsstaaten: **FR GB**

(72) Erfinder: **Makosch, Günter, Stuttgarter Strasse 40,**
**D-7032 Sindelfingen-Maichingen (DE)**
Erfinder: **Schedewie, Franz, Dr., Schurwaldstrasse 18,**
**D-7030 Böblingen (DE)**

(74) Vertreter: **Teufel, Fritz, Dipl.-Phys., IBM Deutschland**
**GmbH. Europäische Patentdienste Postfach 265,**
**D-8000 München 22 (DE)**

ACTORUM AG

# Beschreibung

Die Erfindung geht von Verfahren zur punktweisen interferometrischen Bestimmung der Topographie von Oberflächen nach dem Oberbegriff der unabhängigen Ansprüche 1 und 4 aus. Derartige Verfahren sind aus dem Dokument EP-A-0 021 148 bekannt.

Viele moderne Herstellverfahren, insbesondere in der Halbleitertechnik, verlangen die Einhaltung sehr enger Toleranzgrenzen für die zu bearbeitenden Oberflächen; die in diesem Zusammenhang interessierenden Parameter sind beispielsweise die Ebenheit der Oberfläche, deren positive oder negative Steigungen, die Lage von Maxima und Minima usw. Neben der statischen Bestimmung der Oberflächentopographie ist es zur Prozesssteuerung auch notwendig, bei einer gerade bearbeiteten Oberfläche (beispielsweise beim Ätzen) die zeitliche Änderung der Oberfläche zu überwachen. Wünschenswert ist ausserdem ein möglichst hoher Messbereich, da teilweise Genauigkeiten von Mikrometern und darunter gefordert werden, andererseits Bereiche bis zu einigen 100 µm überstrichen werden sollen.

Für Messungen mit hoher Genauigkeit sind interferometrische Verfahren bekannt, bei denen die Phasendifferenz (der Gangunterschied) zwischen einem Mess- und einem Referenzstrahlenbündel ausgewertet wird. Mit diesen Verfahren kann unter streifendem Lichteinfall auf der Messoberfläche ein Höhenschichtlinienbild der gesamten Messfläche erzeugt werden (wie in der deutschen Patentschrift DE-C-26 36 498), oder der Messstrahl senkrecht auf die Messoberfläche treffende und dort fokussierte tastet die zu untersuchende Stelle der Oberfläche punktweise an (wie in EP-A- 0 021 148). Bei diesen bekannten interferometrischen Verfahren muss allerdings sichergestellt sein, dass die Phasenbeziehung zwischen den beiden verwendeten Strahlenbündeln nicht gestört wird. Bei stark streuenden Oberflächen, insbesondere solche, bei denen die mittlere Oberflächenrauhigkeit in den Bereich der verwendeten Wellenlänge kommt, ist diese Voraussetzung jedoch nicht mehr erfüllt. Mit Infrarotbeleuchtung könnte zwar der Anwendungsbereich dieser Verfahren erweitert werden, allerding auf Kosten der bekannten Schwierigkeiten, die sich bei der Optik, der Justierung und der Auswertung interferometrischer Verfahren im Infrarotbereich ergeben. Für die praktische Anwendung von interferometrischen Verfahren ist es ausserdem sehr wünschenswert, deren an sich begrenzten Messbereich zu vergrössern, um beispielsweise auch Stufenhöhen von einigen 10 µm auf rauhen Oberflächen messen zu können.

Die vorliegende Erfindung stellt sich daher die Aufgabe, interferometrische Messverfahren der eingangs genannten Art anzugeben, mit denen auch die Topographie rauher Oberflächen genau gemessen werden kann.

Diese Aufgabe wird durch die in den Ansprüchen 1 und 4 gekennzeichneten Erfindungen gelöst, Ausgestaltungen der Erfindungen sind in den Unteransprüchen gekennzeichnet.

Die hier vorgeschlagenen Interferenzverfahren mit streifendem Strahleinfall können sowohl für stark streuende als auch reflektierende Oberflächen verwendet werden. Sie lassen sich für eine Vielzahl von Messproblemen einsetzen: Zur Bestimmung der Topographie wird die Oberfläche punktweise längs geeignet gewählter Linien abgetastet, zur Bestimmung der zeitlichen Änderung eines Oberflächenpunktes wird der zeitliche Verlauf des ortsfesten Messignals registriert. Durch geringfügige Änderungen des Strahlengangs kann der zur Verfügung stehende Messbereich gross oder klein gewählt werden; die Auflösung liegt bei kleinen Messbereichen im Submikronbereich. Von besonderer Bedeutung ist eine Ausgestaltung der vorgeschlagenen Verfahren zur kontaktlosen In-Situ-Messung von Ätzraten beim Trockenätzen. Die Auswertung des Messignals erfolgt mit hoher Genauigkeit mit einem bekannten Phasenkompensationsverfahren.

Ausführungsbeispiele zur Durchführung der Erfindung werden nun anhand von Zeichnungen näher erläutert. Es zeigen:

Fig. 1A den prinzipiellen Aufbau eines interferometrischen Messkopfs mit streifender Inzidenz des Messstrahlenbündels

Fig. 1B eine schematische Darstellung des Strahlengangs im Messkopf nach Fig. 1A

Fig. 2A eine Ausgestaltung des Messkopfs nach Fig. 1A mit erweitertem Messbereich

Fig. 2B eine schematische Darstellung des Strahlengangs im Messkopf nach Fig. 2A

Fig. 3A den schematischen Aufbau einer vollständigen Einrichtung zu interferometrischen Messungen an rauhen Oberflächen mit einem Messkopf nach Fig. 1A

Fig. 3B die Ausgangssignale der Messeinrichtung bei der Bestimmung verschiedener Stufenhöhen

Fig. 4A den schematischen Aufbau einer interferometrischen Anordnung zur In-Situ-Bestimmung von Ätzraten

Fig. 4B den schematischen Aufbau einer weiteren interferometrischen Einrichtung zur In-Situ-Ätzratenbestimmung.

Die hier vorgeschlagenen Messverfahren beruhen auf der Verwendung eines Messstrahlenbündels, das unter einem grossen Einfallswinkel (streifende Antastung) auf die (rauhe) Messfläche gerichtet wird. Bei Einfallswinkeln in der Grössenordnung von 80° wirkt die rauhe Messfläche für den Messstrahl wie eine ebene reflektierende Fläche, die durch die höchsten Erhebungen der rauhen Fläche definiert wird. Auf diese Weise ergibt sich eine wohl-definierte Phasenbeziehung zwischen den einzelnen Punkten des Messstrahlenbündels und damit auch zwischen Messstrahlenbündel und Referenzstrahlenbündel; das letztere kann je nach Anwendungszweck in verschiedener Weise erzeugt werden.

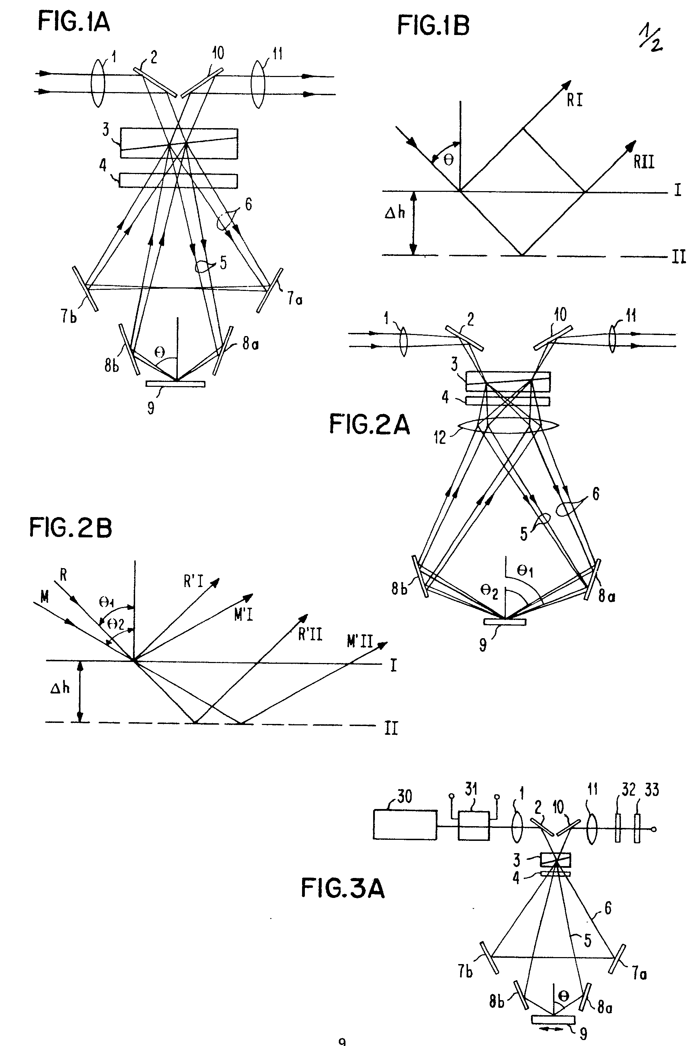

Fig. 1A zeigt eine Ausführungsform eines interferometrischen Messkopfes, der nach dem eben beschriebenen Prinzip arbeitet. Das polarisierte Ausgangsbündel eines Lasers tritt von links kommend in eine Sammellinse 1 und gelangt über einen Umlenkspiegel 2 in ein Wollastonprisma 3, wo es in zwei Bündel aufgespalten wird, ein Messstrahlenbündel 5 und ein Referenzstrahlbündel 6, die beide ein $\lambda/4$-Plättchen 4 durchlaufen. Das Referenzstrahlbündel 6 wird nach zwei Reflexionen an den Umlenkspiegeln 7a und 7b wieder über die $\lambda/4$-Platte in den doppelbrechenden Kristall gelenkt. Das Messstrahlenbündel 5 fällt nach Reflexion am Umlenkspiegel 8a unter dem Einfallswinkel $\theta$ auf die zu untersuchende Oberfläche 9, an der es infolge der schiefen Inzidenz regulär reflektiert wird und über den Umlenkspiegel 8b und die $\lambda/4$-Platte ebenfalls zum Wollastonprisma 3 zurückgelangt. Beide Strahlen durchlaufen somit zweimal das $\lambda/4$-Plättchen 4, so dass ihre Polarisationsrichtung um 90° gedreht wird; die Rolle von ordentlichem und ausserordentlichem Strahl im Wollastonprisma 3 ist somit für die reflektierten Bündel in Bezug auf die Eingangsbündel vertauscht, und beide reflektierten Bündel verlassen das Wollastonprisma 3 als kollineare Strahlen mit senkrecht zueinander orientierter Polarisation. Nach Reflexion an einem weiteren Umlenkspiegel 10 werden die reflektierten Stahlen in der Sammellinse 11 kollimiert und können einer Auswerteeinrichtung zugeführt werden, die für Phasenunterschiede in zueinander senkrecht polarisierten Teilbündeln empfindlich ist.

Die Brechkraft der Linse 1 und 11 wird so gewählt, dass der Brennpunkt des Messstrahlenbündels auf der Oberfläche der Probe 9 liegt. Die optische Weglänge des Referenzbündels 6 ist aus Fokussierungs- und Kohärenzgründen ungefähr gleich gross zu wählen wie die des Messbündels 5.

Zur punktweisen Aufnahme eines Oberflächenprofils wird die Messfläche 9 unter dem fokussierten Messbündel 5 verschoben, beispielsweise in einer rasterförmigen Bewegung. Höhenänderungen der Oberfläche machen sich dabei in einer Änderung der Phasendifferenz zwischen beiden Strahlen bemerkbar. Entsprechend der Darstellung in Fig. 1B bewirkt eine Höhenänderung $\Delta h$ der reflektierenden Fläche von Stellung I zu Stellung II eine Phasendifferenz der reflektierten Strahlen R I bzw. R II bezüglich des Referenzstrahls um den Wert

$$O_m = \frac{4\pi}{\lambda} \cdot \Delta h \cdot \cos\theta \qquad (1)$$

wobei

$\theta$ = Einfallswinkel des Messstrahls,
$\lambda$ = Lichtwellenlänge.

Die Phasendifferenz zwischen den beiden senkrecht zueinander polarisierten Teilbündeln, die Linse 11 verlassen, kann am einfachsten visuell beobachtet werden, wenn hinter Linse 11 ein Polarisator mit einem Azimuthwinkel von 45° zu den Polarisationsrichtungen angebracht wird; die vom Polarisator durchgelassenen Anteile beider Teilbündel interferieren miteinander und erzeugen ein Ausgangssignal, dessen Intensität von der jeweiligen Höhendifferenz abhängt. Bei einer kontinuierlichen Höhenänderung bestimmt sich die Höhendifferenz $\Delta ho$, für die gerade zwei aufeinanderfolgende Interferenzminima auftreten, zu

$$\Delta ho = \frac{\lambda}{2\cos\theta} \qquad (2)$$

Für die hier betrachteten grossen Einfallswinkel liegt der Wert $\Delta ho$ bei ungefähr 2 µm; Höhendifferenzen in diesem Bereich können somit eindeutig bestimmt werden, darüber hinausgehende Höhendifferenzen sind nur bis auf Vielfache von $\Delta ho$ bestimmt (infolge der $2\pi$ Periodizität von $O_m$ in Gleichung (1) ).

In Fig. 2A ist ein interferometrischer Messkopf dargestellt, der ebenfalls mit streifender Inzidenz des Messstrahlenbündels arbeitet, bei dem aber der eindeutige Messbereich im Vergleich zum Messkopf nach Fig. 1 beträchtlich erweitert ist. Diese Erweiterung wird erreicht, indem auch das Referenzstrahlenbündel 6 unter einem grossen Einfallswinkel und fokussiert auf den Punkt der Messoberfläche 9 gerichtet wird, die vom Messstrahlenbündel 5 beaufschlagt ist. Die beiden Bündel 5 und 6 entstehen wie im Beispiel von Fig. 1A durch Aufspaltung eines Eingangsbündels in einem Wollastonprisma 3, wobei hier die Brechkraft der Eingangslinse 1 so gewählt ist, dass deren Brennpunkt im Wollastonprisma 3 liegt. Die divergenten Ausgangsbündel des Wollastonprismas 3 durchlaufen eine $\lambda/4$-Platte 4 und werden mit einer Linse 12 über einen gemeinsamen Umlenkspiegel 8a auf der Probe 9 fokussiert. Das reflektierte Licht gelangt über einen Umlenkspiegel 8b, die Linse 12 und die $\lambda/4$-Platte 4 wieder in das Wollastonprisma 3, wo in bekannter Weise beide Bündel zu einem gemeinsamen Ausgangsbündel vereinigt werden, das über Umlenkspiegel 10 zur Ausgangslinse 11 geführt wird, die es als paralleles Bündel mit senkrecht zueinander polarisierten Teilbündeln verlässt.

Die Einfallswinkel $\theta 1$ und $\theta 2$ der beiden Bündel sind beide so gross gewählt, dass auch an einer rauhen Oberfläche 9 eine reguläre Reflexion entsteht; der Unterschied zwischen beiden Einfallswinkeln liegt in der Grössenordnung eines oder einiger weniger Grad. In einem praktischen Beispiel betrug $\theta 1 = 80°$, $\theta 2 = 80,92°$.

Der Strahlverlauf im Messkopf nach Fig. 2A ist mit Fig. 2B für zwei aufeinanderfolgende Messungen dargestellt, bei denen die Messfläche eine Höhenänderung um $\Delta h$ erfahren hat. In der Stellung II ist die Phasendifferenz zwischen Referenzstrahl R'II und Messstrahl M'II gegenüber den Verhältnissen bei Reflexion in Stellung I gegeben durch:

$$O_m = \frac{4\pi\Delta h}{\lambda}(\cos\theta 1 - \cos\theta 2) \qquad (3)$$

(wobei $\theta_1 < \theta_2$).

Die Bedingung $O_m < 2\pi$, die erfüllt werden muss, wenn der überstrichene Höhenbereich $\Delta h$

eindeutig messbar sein soll, ist in diesem Fall gleichbedeutend mit

$$\cos\theta - \cos\theta 2 > \frac{\lambda}{2\,\Delta h}\,' \qquad (4)$$

womit sich der Eindeutigkeitsbereich $\Delta h_o$ bei den obengenannten Werten für $\theta_1$, $\theta_2$ zu ungefähr 20 µm ergibt. Bei der Abtastung der Oberfläche können somit Höhenänderungen oder Stufen bis zu 20 µm eindeutig bestimmt werden.

Neben der oben beschriebenen Auswertung der Phasendifferenz im Ausgangsstrahlenbündel mit Hilfe eines Polarisators steht eine phasenempfindliche Auswertemethode zur Verfügung, bei der die Phasendifferenz zweier senkrecht zueinander polarisierter, kollinearer Teilstrahlen durch elektrooptische Kompensation mit sehr grosser Genauigkeit gemessen werden kann. Einzelheiten dieses Messverfahrens sind beispielsweise in der deutschen Offenlegungsschrift DE-A- 28 51 750 beschrieben.

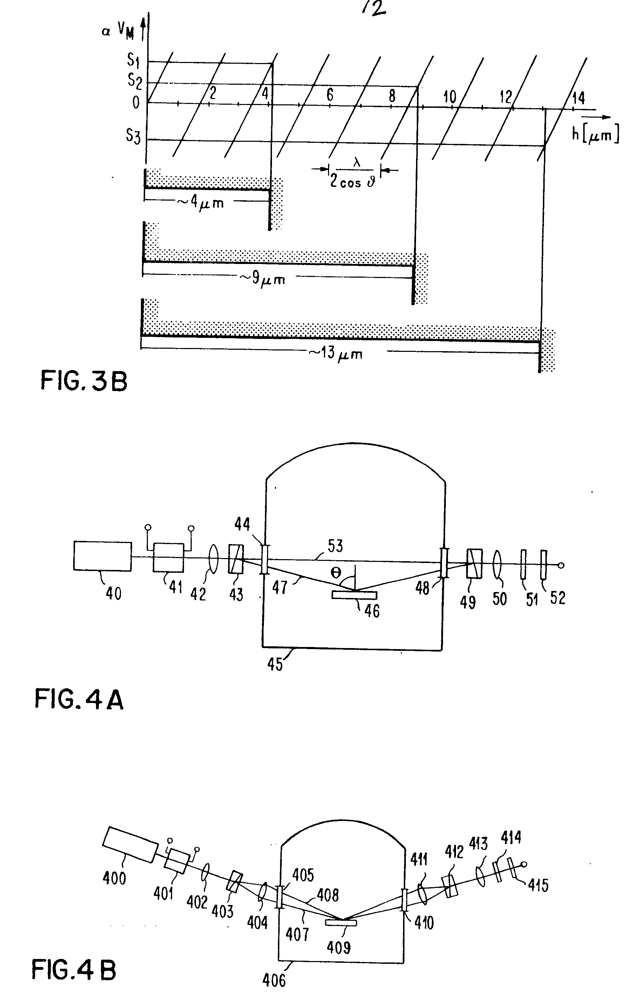

Fig. 3A zeigt eine vollständige Messanordnung mit dieser phasenempfindlichen Auswertung und einem Messkopf nach Fig. 1A. Das polarisierte Ausgangsbündel eines Lasers 30 wird in einem elektrooptischen Modulator 31 in zwei senkrecht zueinander polarisierte Teilstrahlen aufgespalten und deren Phasendifferenz mit einer an den elektrooptischen Modulator 31 angelegten Wechselspannung periodisch verändert. Nach Durchlaufen des Messkopfs nach Fig. 1 (die Bezugszeichen in Fig. 3 entsprechen denen in Fig. 1), gelangt das Ausgangsbündel mit den senkrecht zueinander polarisierten Teilbündeln in einen Polarisator 32. Die Intensität der miteinander interferierenden Bündel wird mit einem Detektor 33 gemessen; aus der Lage der Nullstellen des Ausgangssignals, die den Kompensationszeitpunkten entsprechen, kann die durch Höhenänderungen des Objekts 9 verursachte Phasenänderung mit sehr grosser Genauigkeit bestimmt werden. Eine Phasenmessauflösung von $6 \times 10^{-3}\,\pi$ ist mit diesem bekannten Verfahren möglich; damit ergibt sich für den Messkopf nach Fig. 1 mit einem Einfallswinkel von 80° und einer Wellenlänge $\lambda = 0{,}6328$ µm eine Messauflösung von $\Delta h = 5 \times 10^{-3}$ µm, für den Messkopf nach Fig. 2A bei gleichen Parametern eine Messauflösung von $\Delta h = 6 \times 10^{-2}$ µm.

Fig. 3B zeigt das Ausgangssignal der Phasenmessmethode mit einem Messkopf nach Fig. 1A für drei Stufenhöhen, die alle grösser sind als der maximale Messbereich $\dfrac{\lambda}{2\cos\theta}$ der Anordnung; der streng lineare Zusammenhang zwischen Ausgangssignal und Höhenänderung innerhalb des eindeutigen Messbereichs $\dfrac{\lambda}{2\cos\theta}$ geht daraus klar hervor. Bei einer langsamen Höhenänderung der Messfläche über den eindeutigen Messbereich hinaus kann die Höhenänderung festgestellt werden, indem die Anzahl der Sägezahnsprünge im Messignal ermittelt wird. Bei abrupten Änderungen der Höhe, z.B. bei senkrechten Stufen, versagt diese Methode, so dass bei Überschreiten des eindeutigen Messbereichs die ungefähre Stufenhöhe mit einer anderen Methode ermittelt werden muss, beispielsweise durch mechanisches Abtasten mit einer Messnadel (in Fig. 3 sind diese ungefähren Werte bei den jeweiligen Stufenhöhen angegeben).

Das hier vorgeschlagene interferometrische Messverfahren mit streifender Inzidenz eignet sich ausserdem besonders gut zur In-Situ-Messung von Ätzraten an Stoffen, die in einem Reaktionsgefäss untergebracht sind, und die ohne direkten Kontakt gemessen werden sollen. In diesem Fall wird das fokussierte Messbündel ortsfest auf einen ausgewählten Punkt der geätzten Oberfläche gerichtet und die zeitliche Änderung der Phasendifferenz zu einem stationären Referenzstrahl bestimmt.

Fig. 4A zeigt eine Anordnung zur Bestimmung von Ätzgeschwindigkeiten, die nach dem gleichen Prinzip wie der Messkopf in Fig. 1A arbeitet. Das Ausgangsbündel eines Lasers 40 wird in einem elektrooptischen Modulator 41 in zwei senkrecht zueinander polarisierte Teilstrahlen aufgespalten, deren relative Phasendifferenz durch eine Wechselspannung periodisch variiert wird. Beide Teilstrahlen durchlaufen anschliessend eine Sammellinse 42 und werden in einem elektrooptischen Kristall 43 (z.B. Rochon-Prisma) aufgespalten, bevor sie durch ein optisches Fenster 44 in ein Reaktionsgefäss 45 eintreten, in dem die Oberfläche einer Probe 46 abgetragen werden soll, beispielsweise durch reaktives Ionenätzen. Der Messstrahl 47 fällt unter einem Winkel $\theta$ auf die geätzte Oberfläche und wird dort fokussiert (infolge Linse 42). Das regulär reflektierte Licht des Messstrahls 47 gelangt zusammen mit dem geradlinig das Reaktionsgefäss 45 durchsetzenden Referenzstrahl 53 durch das optische Fenster 48 zu einem weiteren elektrooptischen Kristall 49 (zweites Rochon-Prisma), in dem beide Strahlenbündel rekombiniert werden. Nach Kollimation in Sammellinse 50 treten beide Bündel durch einen Polarisator 51 in einen phasenempfindlichen Detektor 52 ein.

In Fig. 4B ist eine weitere Anordnung zur Bestimmung von Ätzraten dargestellt, die funktionell dem Messkopf in Fig. 2A entspricht. Das Ausgangsbündel eines Lasers 400 wird im elektrooptischen Kristall 401 in bekannter Weise aufgespalten und die Teilbündel mit Sammellinse 402 im Wollastonprisma 403 fokussiert, wo eine räumliche Aufspaltung der Teilbündel erfolgt. Die aus dem Wollastonprisma 403 divergent austretenden Bündel werden mit Sammellinse 404 auf der Oberfläche der geätzten Probe 409 fokussiert, die sich in einem Reaktionsgefäss 406 befindet. Die Einfallswinkel beider Bündel sind gross (80° und darüber) und unterscheiden sich nur wenig. Messbündel 407 und Referenzbündel 408 gelangen über das optische Fenster 405 in das Reaktionsgefäss 406 und treten durch das optische Fenster 410 daraus aus. In der Sammellinse 411 werden beide reflektierten Bündel auf das Wollastonprisma 412 fokussiert und die daraus austretenden divergenten Bündel in Sammellinse 413 kollimiert. Nach Durchgang durch den Analysator 414 wird das entstehende, die jeweilige Phasendifferenz anzeigende Signal im Photodetektor 415 erzeugt.

Bei den Anordnungen zur Ätzratenbestimmung nach Fig. 4A und 4B muss sichergestellt sein, dass während der gesamten Messung keine unbeabsichtigten Relativverschiebungen zwischen Mess- und Referenzstrahl auftreten; in dieser Hinsicht ist die Anordnung nach Fig. 4B vorzuziehen, da dort Mess- und Referenzstrahl in gleicher Weise durch das Reaktionsgefäss geleitet werden. Zur Erhöhung der Messstabilität können auch Regelsysteme eingesetzt werden, bei denen langsame Änderungen gemessen und das Ausgangssignal der interferometrischen Anordnung entsprechend kompensiert wird. Der Einfluss mechanischer Schwingungen kann beispielsweise durch mehrfach schnell hintereinander ausgeführte Messungen ausgeschaltet werden.

Mit dem hier vorgeschlagenen Verfahren kann mit sehr hoher Ortsauflösung (Grösse des fokussierten Laserlichtflecks ungefähr 0,1 mm) und hoher Messauflösung ($10^{-2}$ μm und besser) die mittlere Ätztiefe eines Substrats bestimmt werden, das eine beträchtliche Rauhigkeit aufweist (bis zu 2 μm Spitze zu Spitze).

**Patentansprüche**

1. Verfahren zur punktweisen interferometrischen Bestimmung von Oberflächentopographien, bei dem ein doppelbrechendes Element (3) mit einem nachgeschalteten Viertelwellenlängenplättchen (4) vorgesehen ist, um ein Messstrahlenbündel (5) und ein Referenzstrahlenbündel (6) zu erzeugen, die senkrecht zueinander polarisiert sind, bei dem das Messstrahlenbündel (5) auf die zu untersuchende Mess-Oberfläche (9) fokussiert wird und bei dem das doppelbrechende Element (3) die reflektierten Strahlenbündel wieder vereinigt, dadurch gekennzeichnet, dass als doppelbrechendes Element ein Wollaston-Prisma (3) vorgesehen wird, dem ein konvergentes Strahlenbündel mit schiefer Inzidenz zugeführt wird und dass Mess- und Referenzstrahlenbündel über Umlenkspiegel (7, 8) so zum Wollaston-Prisma (3) zurückgeführt werden, dass sie symmetrisch zur Einfallsebene des Messstrahlenbündels (5) auf der Mess-Oberfläche (9) verlaufen, wobei das Messstrahlenbündel unter streifendem Einfall an der Messoberfläche (9) reflektiert wird.

2. Verfahren nach Anspruch 1, dadurch gekennzeichnet, dass dem Wollaston-Prisma (3) eine Sammellinse (1) vorgeschaltet wird, deren Brennpunkt auf der Messoberfläche liegt.

3. Verfahren nach Anspruch 1, dadurch gekennzeichnet, dass dem Wollaston-Prisma eine Sammellinse (1) vorgeschaltet wird, deren Brennpunkt im Wollaston-Prisma liegt und dass dem Viertelwellenlängenplättchen (4) eine weitere Sammellinse (12) nachgeschaltet wird, mit der die aus dem Wollaston-Prisma (3) austretenden divergenten Bündel von Mess- und Referenzstrahl so auf die Messoberfläche (9) fokussiert werden, dass beide mit streifendem Einfall und geringfügig unterschiedlichen Einfallswinkeln an der Messoberfläche (9) reflektiert werden.

4. Verfahren zur punktweisen interferometrischen Bestimmung von Oberflächentopographien, bei dem ein doppelbrechendes Element (43) mit einem nachgeschalteten Viertelwellenlängenplättchen (44) vorgesehen ist, um ein Messstrahlenbündel (47) und ein Referenzstrahlenbündel (53) zu erzeugen, die senkrecht zueinander polarisiert sind und bei dem das Messstrahlenbündel (47) auf die zu untersuchende Mess-Oberfläche fokussiert wird, dadurch gekennzeichnet, dass die Mess-Oberfläche (46) unter streifendem Einfall vom Messstrahlenbündel (47) beleuchtet wird und, dass ein weiteres, zum ersten symmetrisch angeordnetes doppelbrechendes Element (49) vorgesehen wird, in dem das reflektierte Messstrahlenbündel (47) und das unabgelenkte Referenzstrahlenbündel (53) wieder vereinigt werden.

5. Verfahren nach Anspruch 4, dadurch gekennzeichnet, dass das erste doppelbrechende Element (403) eine symmetrische Aufspaltung vom Mess- und Referenzstrahlenbündel erzeugt, dass eine dem ersten doppelbrechenden Element (403) nachgeschaltete Sammellinse (404) vorgesehen wird, die beide Strahlen-Bündel unter streifendem Einfall und geringfügig unterschiedlichen Einfallswinkeln auf die Mess-Oberfläche (409) fokussiert und dass im Strahlengang der reflektierten Strahlenbündel eine zweite Sammellinse (411) vor dem zweiten doppelbrechenden Element (412) vorgesehen wird.

6. Verfahren nach einem der Ansprüche 1–5, dadurch gekennzeichnet, dass zur Bestimmung der Phasendifferenz der beiden senkrecht zueinander polarisierten Strahlenbündel ein Polarisator (32) vorgesehen wird, dessen Azimuth unter 45° zur Polarisationsrichtung der Strahlen-Bündel steht und dass die Intensität der vom Polarisator (32) durchgelassenen Interferenzstrahlung gemessen wird.

7. Verfahren nach einem der Ansprüche 1–5, dadurch gekennzeichnet, dass zur Bestimmung der Phasendifferenz der beiden senkrecht zueinander polarisierten Strahlenbündel ein elektrooptischer Modulator (31) in den Strahlengang eingefügt wird, an den eine Wechselspannung angelegt wird.

8. Verfahren nach einem der Ansprüche 1–7, dadurch gekennzeichnet, dass das Messstrahlenbündel (5, 47, 407) längs ausgewählter Linien relativ zur Mess-Oberfläche verschoben wird, um das Höhenprofil der Mess-Oberfläche längs dieser Linie aufzuzeichnen.

9. Verfahren nach einem der Ansprüche 1–8, dadurch gekennzeichnet, dass das Messstrahlenbündel (5, 47, 407) auf einen ausgewählten Punkt der Mess-Oberfläche gerichtet wird, um dessen zeitliche Höhenänderung aufzuzeichnen.

**Revendications**

1. Procédé de détermination interférométrique ponctuelle de topographies de surfaces, dans lequel un élément biréfringent (3) à la suite duquel est placée une lame quart d'onde (4) est présent, pour produire un faisceau de travail (ou de mesure) (5) et un faisceau de référence (6), polarisés perpendiculairement l'un par rapport à l'autre, on focalise le faisceau de travail (5) sur la surface de mesure (ou à mesurer) (9) à examiner et l'élément biréfringent (3) réunit de nouveau les faisceaux réfléchis, caractérisé en ce que l'on utilise, comme élément biréfringent, un prisme de Wollaston (3) sur lequel on envoie un faisceau convergent avec une incidence oblique, et en ce qu'on renvoie le faisceau de mesure et le faisceau de référence sur le prisme de Wollaston (3) par l'intermédiaire de miroirs de déviation (7, 8) de façon qu'ils soient symétriques par rapport au plan d'incidence du faisceau de travail (5) sur la surface à mesurer (9), le faisceau de travail se réfléchissant sous une incidence rasante sur la surface à mesurer (9).

2. Procédé selon la revendication 1, caractérisé en ce que le prisme de Wollaston (3) est précédé par une lentille convergente (1) dont le foyer est sur la surface à mesurer.

3. Procédé selon la revendication 1, caractérisé en ce que le prisme de Wollaston est précédé par une lentille convergente (1) dont le foyer se trouve dans le prisme de Wollaston, et en ce que la lame quart d'onde (4) est suivie par une autre lentille convergente (12) par laquelle le faisceau de mesure et le faisceau de référence divergents sortant du prisme de Wollaston (3) sont focalisés sur la surface à mesurer (9) de telle façon qu'ils se réfléchissent tous deux avec une incidence rasante et des angles d'incidence rasante et des angles d'incidence légèrement différents sur la surface à mesurer (9).

4. Procédé de détermination interférométrique ponctuelle de topographies de surfaces, dans lequel un élément biréfringent (43) à la suite duquel est placée une lame quart d'onde (44) est présent, pour produire un faisceau de travail (ou faisceau de mesure) (47) et un faisceau de référence (53), polarisés perpendiculairement l'un par rapport à l'autre, et dans lequel le faisceau de travail (47) est focalisé sur la surface à mesurer à examiner, caractérisé en ce que la surface à mesurer (46) est éclairée par le faisceau de travail (47) sous une incidence rasante, et en ce qu'un autre élement biréfringent (49) disposé symétriquement par rapport au premier est présent, élément dans lequel de faisceau de travail (47) réfléchi et le faisceau de référence (53) non dévié se réunissent de nouveau.

5. Procédé selon la revendication 4, caractérisé en ce que le premier élément biréfringent (403) produit un dédoublement symétrique du faisceau de travail et du faisceau de référence, en ce qu'une lentille convergente (404) est placée à la suite du premier élément biréfringent (403) et focalise sur la surface à mesurer (409) les deux faisceaux sous incidence rasante et avec des angles d'incidence légèrement différents, et en ce qu'une seconde lentille convergente (411) est placée sur le trajet du faisceau réfléchi, avant le second élément biréfringent (412).

6. Procédé selon l'une quelconque des revendications 1 à 5, caractérisé en ce que, pour déterminer le déphasage des deux faisceaux polarisés perpendiculairement l'un par rapport à l'autre, on utilise un polariseur (32) dont l'azimut est à 45° de la direction de polarisation des faisceaux, et en ce que l'on mesure l'intensité du faisceau d'interférence transmis par le polariseur (32).

7. Procédé selon l'une quelconque des revendications 1 à 5, caractérisé en ce que, pour déterminer le déphasage des deux faisceaux polarisés perpendiculairement l'un par rapport à l'autre, on insère sur le trajet des faisceaux un modulateur électro-optique (31) auquel on applique une tension alternative.

8. Procédé selon l'une quelconque des revendications 1 à 7, caractérisé en ce qu'on décale le faisceau de travail (5, 47, 407) suivant des lignes choisies par rapport à la surface à mesurer pour afficher le profil de cote de la surface à mesurer le long de cette ligne.

9. Procédé selon l'une quelconque des revendications 1 à 8, caractérisé en ce qu'on dirige le faisceau de travail (5, 47, 407) sur un point choisi de la surface à mesurer, pour afficher sa variation de cote avec le temps.

**Claims**

1. Method of interferometrically determining surface topographies through point by point probing, where a birefringent element (3) with a series-arranged $\lambda/4$ plate (4) is provided to produce a measuring beam (5) and a reference beam (6) that are mutually orthogonally polarized, where the measuring beam (5) is focussed onto the surface (9) to be examined, and where the birefringent element (3) re-combines the reflected beams, characterized in that a Wollaston prism (3) is provided as a birefringent element to receive a convergent beam under oblique incidence, and that the measuring and reference beams are returned to the Wollaston prism (3) by deflecting mirrors (7, 8) in such a manner that they travel symmetrically to the plane of incidence on the surface (9) to be measured, the measuring beam (5) being reflected at a grazing angle of incidence at the surface (9) to be measured.

2. Method as claimed in claim 1, characterized in that the Wollaston prism (3) is preceded by a converging lens (1) having its focal point on the surface to be measured.

3. Method as claimed in claim 1, characterized in that the Wollaston prism is preceded by a converging lens (1) having its focal point in the Wollaston prism, and that the $\lambda/4$ plate (4) is followed by another converging lens (12) by which the divergent measuring and reference beams exiting from the Wollaston prism (3) are focussed onto the surface (9) to be measured in such a manner that both are reflected from the surface (9) to be measured at grazing incidence and at slightly differing angles of incidence.

4. Method of interferometrically determining surface topograpies through point by point probing, where a birefringent element (43) with a series-arranged $\lambda/4$ plate (44) is provided to produce a measuring beam (47) and a reference beam (53) which are mutually orthogonally polarized, and where the measuring beam (47) is focussed onto the surface to be measured, characterized in that the surface (46) to be measured is illuminated under grazing incidence by the measuring beam (47) and that a further birefringent element (49) is arranged symmetrically to the first element, which further element (49) re-combines the reflected measuring beam (47) and the nondeflected reference beam (53).

5. Method as claimed in claim 4, characterized in that the first birefringent element (403) generates a symmetrical splitting of measuring and reference beams, that a converging lens (404) arranged in series with the first birefringent element (403) is provided to focus both beams under grazing incidence and at slightly different angles of incidence onto the surface (409) to be measured, and that in the beam path of the reflected beams a second converging lens (411) preceding the second birefringent element (412) is provided.

6. Method as claimed in any one of claims 1 to 5, characterized in that for determining the phase difference of the two mutually orthogonally polarized beams a polarizer (32) is provided whose azimuth is at 45° to the direction of polarization of the beams, and that the intensity of the interference radiation passing through the polarizer (32) is measured.

7. Method as claimed in any one of claims 1 to 5, characterized in that for determining the phase difference of the two mutually orthogonally polarized beams an electro-optical modulator (31) is inserted in the beam path, with an alternating voltage being applied thereto.

8. Method as claimed in any one of claims 1 to 7, characterized in that the measuring beams (5, 47, 407) are shifted along selected lines relative to the surface to be measured in order to record the height profile of the surface to be measured along this line.

9. Method as claimed in any one of claims 1 to 8, characterized in that the measuring beams (5, 47, 407) are directed onto a predetermined point of the surface to be measured in order to determine the latter's height modification with respect to time.

**FIG.1A**

**FIG.1B**

½

**FIG.2A**

**FIG.2B**

**FIG.3A**

FIG. 3 B

FIG. 4 A

FIG. 4 B

11